(19) Europäisches Patentamt
European Patent Office
Office européen des brevets

(11) EP 2 740 921 A1

(12) **EUROPEAN PATENT APPLICATION**

(43) Date of publication:
**11.06.2014 Bulletin 2014/24**

(51) Int Cl.:
***F02D 41/00*** *(2006.01)*

(21) Application number: **12195477.0**

(22) Date of filing: **04.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FPT Industrial S.p.A.**
**10156 Torino (IT)**

(72) Inventor: **Odello, Fabio**
**10093 Collegno (IT)**

(74) Representative: **Fiume, Orazio et al**
**Notarbartolo & Gervasi S.p.A.**
**Corso di Porta Vittoria, 9**
**IT-20122 Milano (IT)**

(54) **System for calculating a volumetric filling coefficient of an internal combustion engine**

(57) System for calculating a volumetric filling coefficient ($\eta_{VOL}$) of an internal combustion engine (IC), wherein the volumetric filling coefficient ($\eta_{VOL}$) is calculated as a function of a pseudo-density (gD) of the engine intake gases and of an engine speed of rotation (rpm).

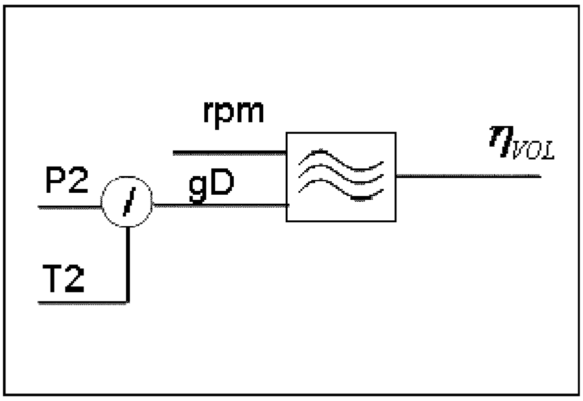


Fig. 2

EP 2 740 921 A1

## Description

Application field of the invention

The present invention refers to the control systems of internal combustion engines and in particular to those systems suitable to estimate the flow rate of substantially fresh gas entering an internal combustion engine. Such systems are based on the so-called volumetric filling coefficient.

Description of the prior art

An optimal management of internal combustion engines needs an accurate estimation of the flow rate of the gas entering the engine cylinders during the intake step.

Such gas usually comprises fresh air and, where an EGR valve is present, a small variable quantity of recirculated exhaust gas.

The estimation of the overall intake flow rate is used for different reasons, for example:

- during the accelerator release, it is used to diagnose the correct functioning of the mass flow sensor, since it is during the accelerator release that the ideal conditions to estimate the gases entering the engine and to compare it with the measurement detected by the mass flow rate occur;
- to compensate construction or ageing drifts of the mass flow sensor itself;
- to perform an injection drift compensation FMO: a strategy based on the estimation of the intake gas flow rate in order to estimate, in its turn, the "lambda". The estimation of the lambda is then used in the so-called strategy of injection drift compensation FMO which compares estimation and measurement of the lambda to estimate, indirectly, the temperature and the pressure at the exhaust manifold and/or the recirculated exhaust gas flow rate.

In general, the estimation of the flow rate is performed by means of a model, known as "Speed-Density" based on the thermodynamic conditions of the intake gas, on the revolutions per minute, on the piston displacement and on the volumetric filling coefficient.

The aforementioned estimation of the gas flow rate entering the internal combustion engine are based on the preceding calculation of a volumetric filling coefficient.

According to the technique known in the art, the volumetric filling coefficient is estimated at a test bench as a discrete function of

- engine revolutions per minute,
- amount of fuel introduced in the engine.

Historically such calculation has been based on the amount of fuel introduced in the engine, since such quantity can be monitored by test bench scales or by means of the electric signal driving the injectors.

The mapping of the volumetric filling coefficient according to the prior art is not sufficient.

In addition, the amount of injected fuel may vary in time, the respective driving electric signal being the same.

Summary of the invention

The aim of the present invention is to improve the control of the internal combustion engine, in particular in the estimation of the volumetric filling coefficient which is functional to the estimation of the flow rate of the substantially fresh gases entering the engine. The accuracy of such estimation, as shown above, affects numerous further systems and methods for controlling the engine.

A method for calculating a volumetric filling coefficient of an internal combustion engine is the object of the present invention.

According to the present invention, the volumetric filling coefficient is mapped as a preferably discrete function of the engine revolutions per minute and of a pseudo-density of the substantially fresh gases entering the engine. Advantageously, such pseudo-density is a magnitude that is far more interrelated with the volumetric filling coefficient whose estimation is intended to be performed. On the contrary, the amount of injected fuel is more suitable to represent the torque developed by the engine.

Such pseudo-density is given by the pressure/temperature ratio measured at the intake manifold of the engine. Advantageously, such measurements are usually available, since they are functional to the estimation of the flow rate of the substantially fresh gases entering the engine. Furthermore, such measurements are performed by, respectively, pressure and temperature sensors that are more stable and precise in time with respect to the injectors behaviour, in

relation to the respective driving electric signal.

Thus, according to the present invention, the mapping of the volumetric filling coefficient is far more realistic and stable than the one performed according to the technique known in the art that is based on the amount of injected fuel.

The advantages deriving by the present invention affect all the aforementioned control methods.

The present invention finds application in internal combustion engines that include at least an exhaust step of discharging the exhaust gases and an intake step of sucking substantially fresh gases, where "substantially" means that the fresh gases may contain a percentage of exhaust gas recirculated according to the EGR technique.

A device for estimating a flow rate of the gases entering a cylinder of an internal combustion engine is also object of the present invention, the device comprising processing means configured for estimating said flow rate and comprising storage means wherein the volumetric filling coefficient values calculated as a function of a pseudo-density of the gases entering the engine and as a function of an engine speed of rotation are stored.

A further object of the present invention is an internal combustion engine and a ground vehicle comprising said internal combustion engine.

The claims are an integral part of the present description.

Brief description of the Figures

Further purposes and advantages of the present invention will become clear from the following detailed description of a preferred embodiment (and of its alternative embodiments) and the drawings that are attached hereto, which are merely illustrative and non-limitative, in which:

figure 1 shows an internal combustion engine comprising means to realize the present method;
figure 2 shows a diagram of the calculation of the volumetric filling coefficient according to the present invention;
figure 3 shows a diagram of the estimation of a flow rate of gases entering an internal combustion engine exploiting the preceding calculation shown in figure 2.

In the figures the same reference numbers and letters identify the same elements or components.

Detailed description of preferred embodiments of the invention

The method that is object of the invention is now described. The method allows to obtain an improved estimation of the flow rate of gases, substantially fresh air, namely possibly containing recirculated exhaust gas, entering an internal combustion engine, by means of the measurement of the pressure P3 at the exhaust manifold OP of the internal combustion engine IC.

In order to understand better the present invention, a comparison is shown between the first equation (e1) representing, for example, a Speed-Density model, per se known, and a second equation (e2) representing the Speed-Density model modified according to the present invention:

$$\dot{m}_{eng}\left[mg/cyl\right]=\eta_{vol}\frac{p_2}{RT_2}V_d\cdot\frac{10^5}{N_{cyl}} \qquad \text{(e1)}$$

Where, with reference to figure 3,

- $\dot{m}_{eng}$ stands for the theoretical maximum flow rate of the gases entering a cylinder of the engine expressed in mg according to a method known as Speed-Density;
- P2 and T2 stand for respectively the pressure and the temperature at the intake manifold IP,
- $N_{cyl}$ stands for the number of cylinders of the engine,
- Vd stands for the piston displacement of the engine,
- $\eta_{VOL}$ is the volumetric filling coefficient,
- R is the constant of the gases.

$\eta_{VOL}$ : volumetric filling coefficient, whose meaning is known to the person skilled in the art.

As regards the volumetric filling coefficient $\eta_{VOL}$ , it is obtained empirically at the test bench, as a preferably discrete function of a magnitude proportional to the pseudo-density gD of the substantially fresh intake gases and to the engine revolutions per minute.

An at least bi-dimensional map is thus obtained.

Such pseudo-density gD is measured as the ratio between pressure P2 and temperature T2 measured at the intake manifold IP.

Advantageously, the method described herein, with its alternative embodiments, may be easily implemented in an engine control unit ECI, which is also part of the present invention. Thus, the present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present invention.

## Claims

1. Method for calculating a volumetric filling coefficient ($\eta_{VOL}$) of an internal combustion engine (IC), wherein the volumetric filling coefficient ($\eta_{VOL}$) is calculated as a function of a pseudo-density (gD) of the engine intake gases and of an engine speed of rotation (rpm).

2. Method according to claim 1, wherein said pseudo-density is equal to a ratio between a pressure (P2) and a temperature (T2) measured at the intake (IP) of the internal combustion engine (IC).

3. Method for estimating a flow rate ($\dot{m}_{eng}$) of gases entering a cylinder of an internal combustion engine (IC) comprising a step for using a volumetric filling coefficient ($\eta_{VOL}$) calculated according to the of the preceding claims.

4. Method according to claim 3, wherein said flow rate $\dot{m}_{eng}$ of gases entering a cylinder of an internal combustion engine (IC) is of the Speed-Density type, wherein said flow rate is calculated as

$$\dot{m}_{eng}\left[mg/cyl\right]=\eta_{vol}\frac{p_2}{RT_2}V_d\cdot\frac{10^5}{N_{cyl}}$$

Where

- P2 and T2 stand for, respectively, a pressure and a temperature measured at the intake (IP) of the internal combustion engine (IC),
- $N_{cyl}$ stands for the number of cylinders of the engine,
- Vd stands for a piston displacement of the engine,
- $\eta_{VOL}$ is the volumetric filling coefficient,
- R is the constant of the gases.

5. Device for estimating a flow rate ($\dot{m}_{eng}$) of the gases entering a cylinder of an internal combustion engine (IC) comprising processing means (ECI) configured for estimating said flow rate and comprising storage means wherein the volumetric filling coefficient values ($\dot{m}_{eng}$) calculated as a function of a pseudo-density (gD) of the gases entering the engine and as a function of an engine speed of rotation (RPM) are stored.

6. Internal combustion engine comprising a device (ECI) according to claim 5.

7. Ground vehicle comprising an internal combustion engine according to claim 6.

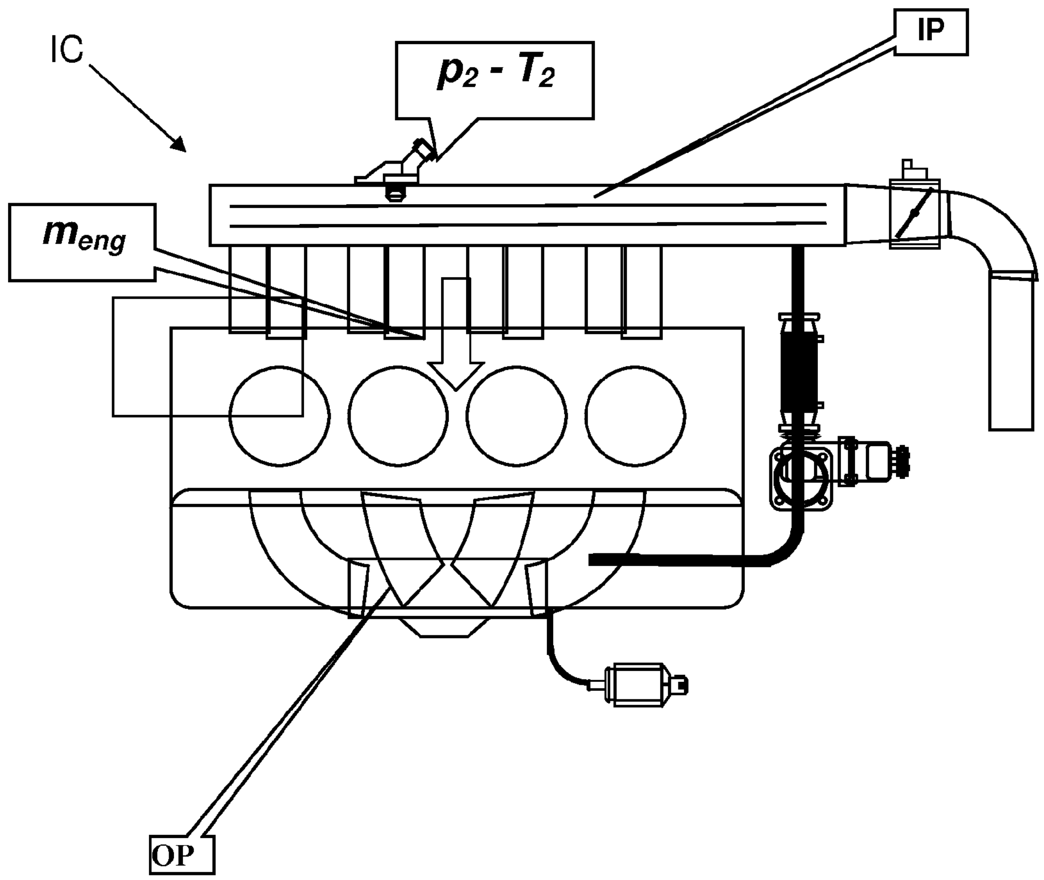


Fig. 1

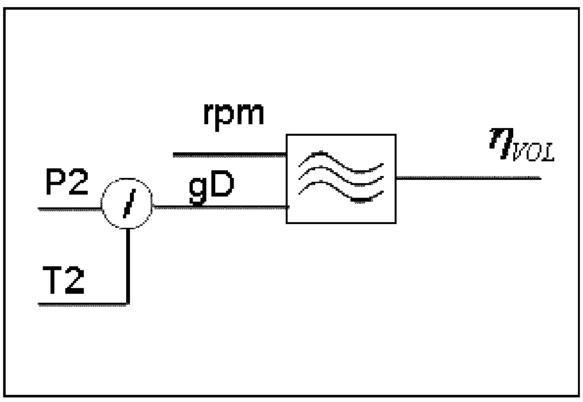


Fig. 2

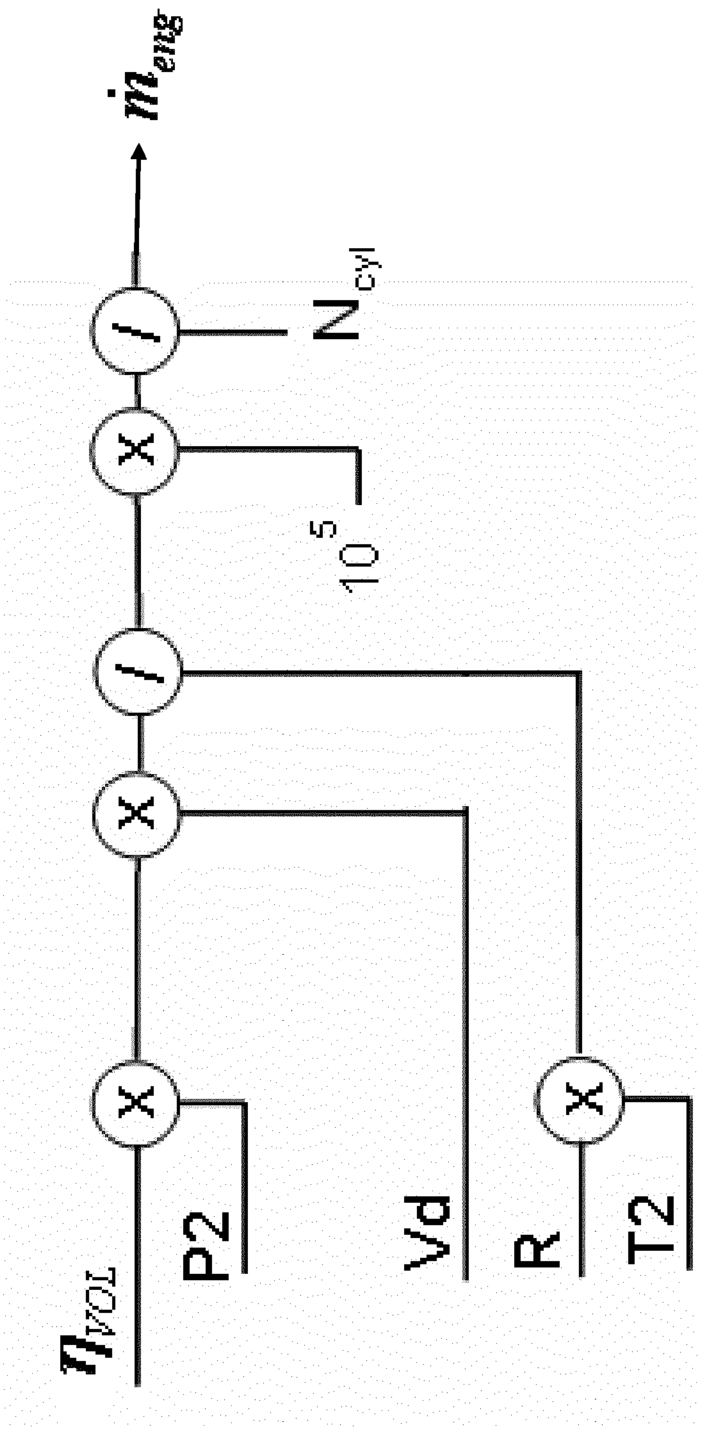


Fig. 3

Europäisches Patentamt
European Patent Office
Office européen des brevets

# EUROPEAN SEARCH REPORT

Application Number
EP 12 19 5477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/291534 A1 (WANG YUE-YUN [US] ET AL) 22 November 2012 (2012-11-22)<br>* the whole document *<br>----- | 1-7 | INV.<br>F02D41/00 |
| X | FR 2 824 596 A1 (RENAULT [FR])<br>15 November 2002 (2002-11-15)<br>* pages 1,2,4; figure 1 *<br>* pages 7-12; claims 1,2,7 *<br>----- | 1-7 | |
| A | Heywood John B.: "Internal Combustion Engine Fundamentals, PASSAGE.",<br>1 January 1988 (1988-01-01), Mcgraw-Hill Inc., XP002696867,<br>ISBN: 007028637X<br>page 209,<br>* page 209 *<br>----- | 1-7 | |

| TECHNICAL FIELDS SEARCHED (IPC) |
|---|
| F02D |

The present search report has been drawn up for all claims

3

| Place of search | Date of completion of the search | Examiner |
|---|---|---|
| Munich | 23 May 2013 | Ossanna, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 12 19 5477

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2013

| Patent document cited in search report | Publication date | Patent family member(s) | Publication date |
|---|---|---|---|
| US 2012291534 A1 | 22-11-2012 | CN 102787947 A<br>DE 102012207895 A1<br>US 2012291534 A1 | 21-11-2012<br>22-11-2012<br>22-11-2012 |
| FR 2824596 A1 | 15-11-2002 | NONE | |

EPO FORM P0459

For more details about this annex : see Official Journal of the European Patent Office, No. 12/82